Europäisches Patentamt

European Patent Office

Office européen des brevets

(11) Veröffentlichungsnummer: **0 173 018**
**B1**

# (12) EUROPÄISCHE PATENTSCHRIFT

(45) Veröffentlichungstag der Patentschrift:
31.01.90

(51) Int. Cl.⁴: **H 02 H 7/00**

(21) Anmeldenummer: 85107663.8

(22) Anmeldetag: 21.06.85

(54) Elektrische Installationsanlage mit Überspannungsschutz.

(30) Priorität: 27.08.84 DE 3431455

(43) Veröffentlichungstag der Anmeldung:
05.03.86 Patentblatt 86/10

(45) Bekanntmachung des Hinweises auf die Patenterteilung:
31.01.90 Patentblatt 90/5

(84) Benannte Vertragsstaaten:
AT CH DE LI

(56) Entgegenhaltungen:
EP-A- 0 046 545
EP-A- 0 110 070
DE-A- 3 029 453
DE-A- 3 223 392
GB-A- 2 010 613
US-A- 4 288 833

(73) Patentinhaber: Siemens Aktiengesellschaft,
Wittelsbacherplatz 2, D-8000 München 2 (DE)

(72) Erfinder: Solleder, Reinhard, Maxstrasse 6,
D-8411 Hainsacker (DE)
Erfinder: Stich, Karl-Heinz, Friedrich-Ebert-Strasse 10,
D-8400 Regensburg (DE)

ACTORUM AG

## Beschreibung

Die Erfindung bezieht sich auf eine elektrische Installationsanlage zur Speisung von Verbrauchern, insbesondere mit elektronischen Bauteilen, aus einem Netz, im einzelnen nach Oberbegriff des Patentansuches 1. Die Verbraucher sind durch Überspannungsableiter zu Erdpotential in einem Nebenzweig hinsichtlich der Verbraucher gegen Überspannung gesichert. Die Überspannungsableiter selbst sind durch eine Einrichtung gesichert und die Überspannungsableiter einer Gruppe sind erdseitig elektrisch verbunden und stehen durch eine Erdungsleitung mit Erde in Verbindung. Derartige Installationsanlagen sind bekannt (EP-A1-0 046 545). Zum Schutz der Verbraucher können neben den Überspannungsableitern zusätzlich auch übliche Fehlerstromschutzschalter eingesetzt werden, die Bedienungspersonen und die Anlage schützen.

Überspannungen, hervorgerufen durch Gewitter oder Schaltvorgänge, können elektrische Niederspannungsanlagen schädigen, indem sie Isolationen zerstören, gegebenenfalls vorhandene Fehlerstromschutzschalter zum unerwünschten Auslösen bringen oder indem sie elektronische Bauteile in Verbrauchergeräten schädigen. Solche Bauteile werden bereits durch die Auswirkung entfernter Blitzeinschläge beeinflußt oder zerstört.

Überspannungsableiter können Funkenstrecken bzw. Varistoren sein. Sie können selbst schadhaft werden und Dauerströme bis zu Kurzschlußströmen durchlassen. Wenn ein Überspannungsableiter schadhaft geworden ist, belastet er durch die Dauerströme die Installationsanlage und kann diese schädigen bzw. zu Brandgefahr führen. Es ist daher erforderlich, den Überspannungsableiter selbst bei Defekten zu sichern.

Bei der oben geschilderten bekannten Anlage (nach EP-A1-0 046 545) kann jedem Überspannungsableiter eine Schaltstrecke zugeordnet sein, die von einem thermischen und magnetischen Auslöser bei Überlast geöffnet werden kann. Eine derartige Schutzmaßnahme ist jedem Überspannungsableiter zugeordnet.

Es ist bekannt, Überspannungsableiter durch Fehlerstromschutzschalter zu sichern, indem die Fehlerstromschutzschalter nicht nur die Installationsanlage bzw. die Bedienungspersonen schützen, sondern auch zugleich bei defekten Überspannungsableitern abschalten. Hierzu ist in einem Hauptzweig zwischen Netz und Verbraucher ein Fehlerstromschutzschalter netzseitig vor Überspannungsableitern angeordnet, die in einem Nebenzweig gegen Erde ableiten (DE-PS 3 029 453). Die bekannte Geräteanordnung, die aus Fehlerstromschutzschalter und Überspannungsableitern besteht, weist einen Fehlerstromschutzschalter auf, der funktionell auf die Überspannungsableiter abgestimmt ist. Bei abzuleitenden Stoßströmen von mindestens 5 kA bei einem Stoßimpuls 8/20 µs löst er nicht aus. Außerdem löst er erst bei länger als 10 ms anstehenden Belastungen, bezogen auf 50 Hz Netzfrequenz, aus.

Unnötiges Auslösen eines Fehlerstromschutzschalters könnte nämlich sonst zu Unannehmlichkeiten oder auch zu Schäden führen, beispielsweise durch verdorbene Waren in Gefriergeräten. Bei einem schadhaft gewordenen Überspannungsableiter soll der vorgeschaltete Fehlerstromschutzschalter andererseits die Überspannungsableiter und die Verbraucher vom Netz abschalten.

Der Erfindung liegt die Erkenntnis zugrunde, daß es günstiger ist, den Fehlerstromschutz und den Überspannungsschutz eindeutig zu trennen, so daß die Installationsanlage bei defekten Überspannungsableitern weiterhin in Betrieb bleiben kann und gegebenenfalls unter dem Schutz von Fehlerstromschutzschaltern steht. Es sind dann keine Kompromisse bei der Empfindlichkeit des Fehlerstromschutzschalters einzugehen, um ihn ausreichend stoßstromfest zu entwickeln, so daß bei Überspannungen, die von den Überspannungsableitern gegen Erde abgeleitet werden, nicht unerwünscht auslöst.

Überspannungsschutz wird bisher in der Regel hauptsächlich durch Einsatz von Überspannungsableitern im Netz der Energieversorgungsunternehmen zu lösen versucht. Verbraucher mit elektronischen Bauteilen können so jedoch nicht ausreichend geschützt werden.

Der Erfindung liegt die Aufgabe zugrunde, eine elektrische Installationsanlage zur Speisung von Verbrauchern zu entwickeln, die mit geringem Aufwand und mit weniger Bauteilen einen Schutz aller Überspannungsableiter bzw. der Installationsanlage gewährleistet.

Die Lösung der geschilderten Aufgabe erfolgt durch eine elektrische Installationsanlage nach Patentanspruch 1. Danach ist die Erdungsleitung durch einen Ringkern aus magnetisch leitendem Material hindurchgeführt. Die Sekundärwicklung des Ringkerns ist mit einem Auslöser verbunden, der mit einem Schaltschloß in Eingriffverbindung steht. Dieses steht zumindest mit einer Schaltstrecke in der Erdungsleitung in Eingriffsverbindung, gegebenenfalls auch mit einer Schaltstrecke in einer Meldeleitung. Der Ringkern ist dabei aus einem solchen Material ausgebildet, daß er in Verbindung mit dem Auslöser Stoßströme ohne auszulösen durchläßt, wobei die Auslösung zeitverzögert erfolgt. Bei einer derartigen Installationsanlage ist man beim Einsatz von Überspannungsableitern von Fehlerstromschutzschaltern unabhängig und die Überspannungsableiter sind bei Defekten wirkungsvoll gesichert und sie lassen sich universell einsetzen.

Überspannungsableiter und gegebenenfalls einzusetzende Fehlerstromschutzschalter können dabei jeder für sich optimal für Verbraucher und Installationsanlage ausgebildet bzw. ausgewählt werden. So kann ein Fehlerstromschutzschalter in gewünschter Weise empfindlich sein und man kann sein Ansprechverhalten günstig wählen, da er Überströme nicht zu den Überspannungsableitern durchzulassen braucht. Die gegensätzlichen Anforderungen unter den Kriterien Stoßfestigkeit und Empfindlichkeit braucht man so nicht unter Preisgabe von anderen Vorteilen miteinander verträglich zu machen.

Der Nebenzweig mit den Überspannungsableitern kann grundsätzlich vor oder nach einem Zähler der Hausinstallation angeschlossen werden. Einem Fehlerstromschutzschalter können auch weitere Fehlerstromschutzschalter in den einzelnen Verbraucherzweigen nachgeordnet werden, wobei die üblichen Auswahlbedingungen unter dem Blickwinkel der Selektivität berücksichtigt werden können. Die Verbraucher kann man auch zusätzlich durch Leitungsschutzschalter oder Sicherungen in gewohnter Weise weiter schützen.

Bei der Installationsanlage nach der Erfindung eignen sich Überspannungsableiter, die im wesentlichen aus spannungsabhängigen Widerstandselementen bestehen. Sie können auch als Entladungsstreckeneinrichtung ausgebildet sein. Bei Überspannungsableitern, die als Entladungsstreckeneinrichtung ausgebildet sind, kann ein spannungsabhängiges Widerstandselement in Reihe geschaltet werden, um bei einem schadhaften Überspannungsableiter einen Spannungsfall aufzubauen und den Strom zu begrenzen und einen weiteren Schutz zu bieten. Die Einrichtung zur Sicherung der Überspannungsableiter kann dann in Anlehnung an die Erfahrungen bei stoßstromfesten Fehlerstromschutzschaltern, die zeitverzögert auslösen, noch unempfindlicher gehalten werden.

Einer Entladungsstreckeneinrichtung kann auch ein spannungsabhängiges Widerstandselement parallelgeschaltet werden, um eine Grob- und Feinabstimmung zu erzielen, indem der Überspannungsableiter grobe Überspannungen und Stromstöße ableitet und das parallel angeordnete spannungsabhängige Widerstandselement bei länger anstehenden geringeren Störungen anspricht.

Die Schutzeinrichtung zur Sicherung der Überspannungsableiter bei Defekten kann auch als elektronische Einrichtung ausgebildet sein, indem zwischen Sekundärwindung und Auslöser eine Verstärkereinrichtung eingeschaltet ist, deren Versorgungsleitungen zwischen einem Außenleiter und dem Neutralleiter netzseitig vor den zugeordneten Überspannungsableitern angeschlossen sind.

Die Erfindung soll nun anhand von in der Zeichnung grob schematisch wiedergegebenen Ausführungsbeispielen näher erläutert werden.

In Fig. 1 ist eine Installationsanlage mit Überspannungsableitern und weiteren Schutzeinrichtungen veranschaulicht.

In Fig. 2 ist eine Schutzeinrichtung zum Sichern der netzseitig vorgeschalteten Überspannungsableiter bei Defekten zusammen mit den Überspannungsableitern wiedergegeben, also als Überspannungsschutzgerät ausgebildet.

In Fig. 3 ist veranschaulicht, wie das Überspannungsschutzgerät nach Fig. 2 hinter oder vor einem Hausinstallationszähler angeschlossen werden kann.

In Fig. 4 ist eine Einrichtung aus Überspannungsableitern dargestellt, die jeweils aus einer Entladungsstreckeneinrichtung und einem in Reihe geschalteten spannungsabhängigen Widerstandselement, z.B. einem Varistor, bestehen.

In Fig. 5 ist eine Einrichtung aus Überspannungsableitern wiedergegeben, bei der jeweils einer Entladungsstreckeneinrichtung ein spannungsabhängiges Widerstandselement parallelgeschaltet ist.

In Fig. 6 ist ein Überspannungsschutzgerät wiedergegeben, das mit einem elektronischen Verstärker arbeitet.

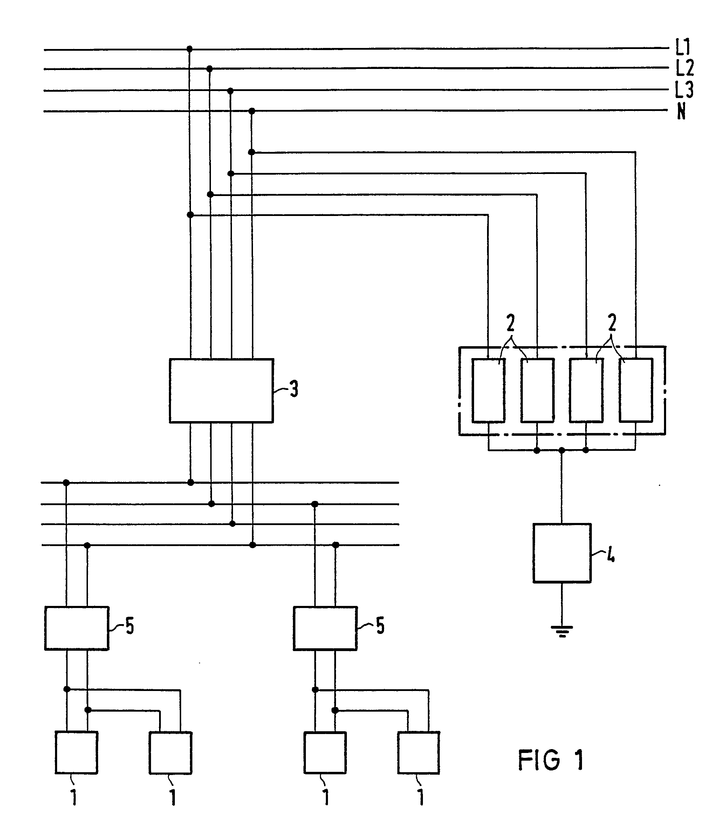

Die elektrische Installationsanlage nach Fig. 1 zur Speisung von Verbrauchern 1 aus einem Netz ist durch Überspannungsableiter 2 geschützt. Das Netz ist mit den Außenleitern L1, L2 und L3 sowie dem Neutralleiter N veranschaulicht. Die Verbraucher können durch Fehlerstromschutzschalter 3 geschützt sein. Überspannungsableiter 2 sind hinsichtlich Netz und Verbraucher in einem Nebenzweig angeordnet und leiten Überspannungen nach Erdpotential ab. Die Überspannungsableiter 2 sind dabei selbst durch eine Einrichtung 4 zur Sicherung der Überspannungsableiter bei Defekten gesichert. Dem Fehlerstromschutzschalter 3 können üblicherweise weitere Fehlerstromschutzschalter 5 und/oder Leitungsschutzschalter nachgeschaltet sein.

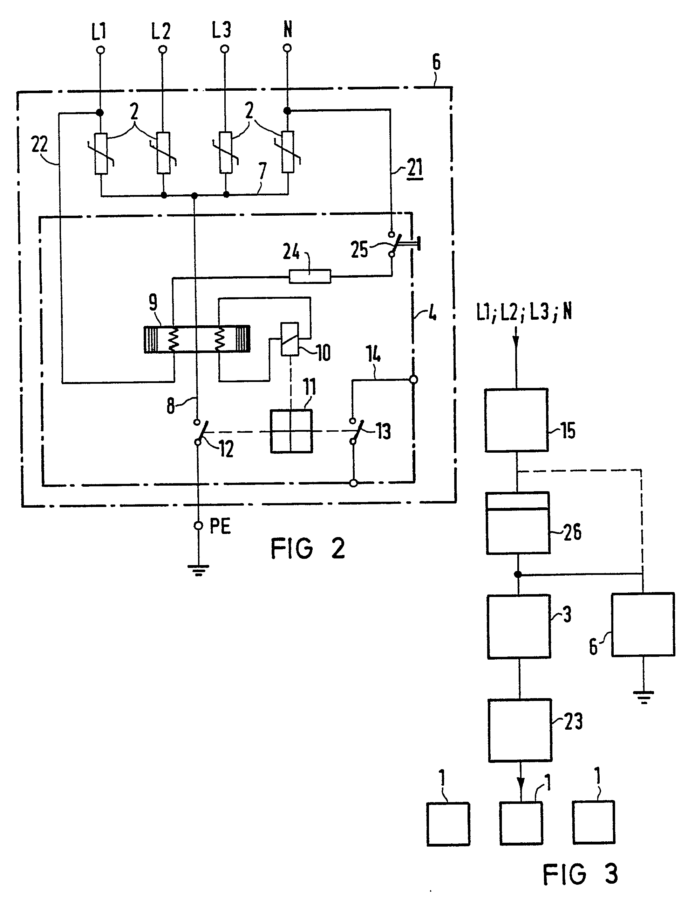

Die Einrichtung 4 zur Sicherung der Überspannungsableiter 2 kann nach Fig. 2 zu einem einheitlichen Gerät, einem Überspannungsschutzgerät 6 zusammengebaut sein. Die Überspannungsableiter 2 einer Gruppe, für die Außenleiter L1 bis L3 und den zugeordneten Neutralleiter N sind danach erdseitig elektrisch verbunden. Von der Verbindungsleitung 7 ist eine Erdungsleitung 8 durch einen Ringkern 9 aus magnetisch leitendem Material hindurch an Erde angeschlossen. Der Ringkern 9 ist in Verbindung mit einem im Sekundärkreis angeordneten Auslöser 10 stoßstromfest und somit auch zeitverzögert ausgebildet. Der Auslöser 10 steht mit einem Schaltschloß 11 in Eingriffverbindung, das zumindest mit einer Schaltstrecke 12 im Erdungsleiter 8 in Eingriffverbindung steht. Im Ausführungsbeispiel steht das Schaltschloß auch mit einer Schaltstrecke 13 in einer Meldeleitung 14 in Verbindung.

Die Überspannungsableiter 2 bestehen im Ausführungsbeispiel im wesentlichen aus spannungsabhängigen Widerstandselementen.

In der schematischen Darstellung nach Fig. 3 ist ein Hausanschluß 15, beispielsweise mit Hausanschlußsicherung veranschaulicht. Ihm ist nachgeschaltet ein Installationszähler 26 hinter dem oder vor dem – gestrichelte Linie – in einem Nebenzweig eine Überspannungsschutzeinrichtung angeschlossen ist. Fehlerstromschutzschalter 3 und Leitungsschutzschalter 23 sind vor den Verbrauchern 1 eingeschaltet.

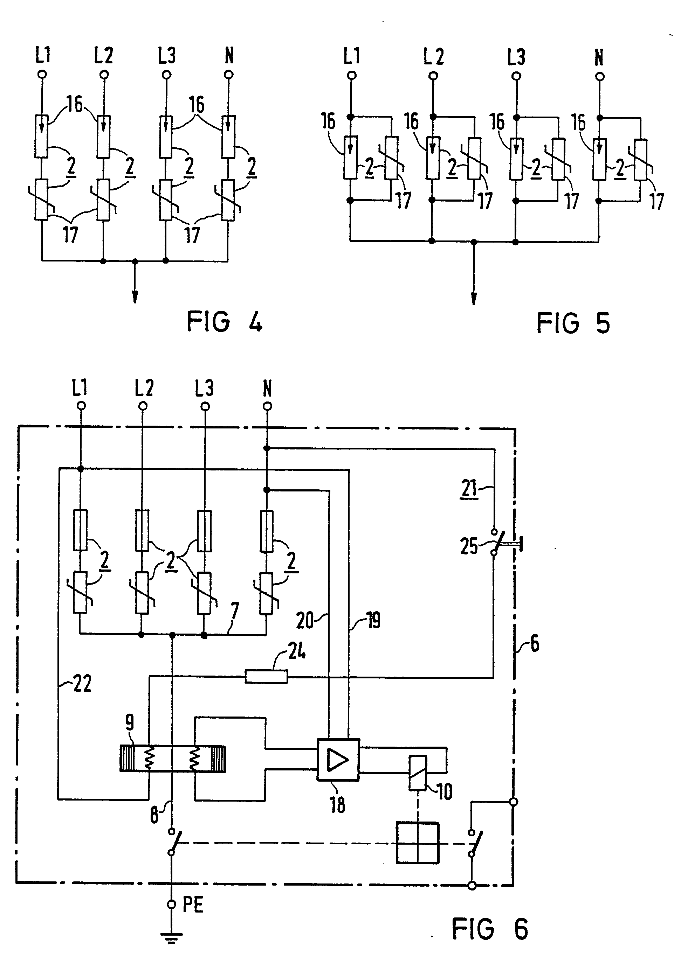

Die Einrichtung aus Überspannungsableitern 2 besteht nach Fig. 4 aus Entladungsstreckeneinrichtungen 16 und spannungsabhängigen Widerstandselementen 17, bzw. Varistoren, in Reihenschaltung. Die Einrichtung aus Überspannungsableitern 2 nach Fig. 5 besteht aus Entladungsstrekken 16 und spannungsabhängigen Widerstandselementen 17 in Parallelschaltung.

Die Überspannungsschutzeinrichtung nach Fig. 6 ist als Überspannungsschutzgerät 6 ausgebildet und arbeitet mit einer elektronischen Verstärkung, ist aber im übrigen entsprechend dem Gerät nach Fig. 2 aufgebaut. Die Überspannungsableiter 2 sind erdseitig wieder elektrisch verbunden. Von der Verbindungsleitung 7 ist eine Erdungsleitung 8 zur Anschlußklemme für Erdpotential durch einen Ringkern 9 hindurchgeführt. Eine Sekundärwindung ist mit einem Auslöser 10 verbunden, wobei ein Verstärker 18 zwischengeschaltet ist. Die Versorgungsleitungen 19 und 20 sind zwischen einem Außenleiter L1 und dem Neutralleiter N netzseitig vor den zugeordneten Überspannungsableiter 2 angeschlossen.

Die Überspannungsschutzgeräte 6 nach Fig. 2 und nach Fig. 6 weisen eine Prüfeinrichtung 21 auf. Sie besteht im wesentlichen aus einer Verbindungsleitung 22 von einem Außenleiter durch den Ringkern 9 hindurch, einem Begrenzungswiderstand 24 und einer Prüftaste 25. Sie ist andererseits mit dem Neutralleiter N verbunden.

Die Überspannungsschutzeinrichtung nach Fig. 2 oder nach Fig. 6 arbeitet wie folgt:

Überspannungen, wie sie bei Gewittereinschlägen und Schaltvorgängen auftreten, werden von den Anschlußklemmen für die Außenleiter L1 bis L3 und für die Neutralleiter N zur Anschlußklemme PE zur Erde abgeleitet. Der Ringkern 9 ist in an sich bekannter Weise aus einem solchen Material ausgebildet, daß er in Verbindung mit dem Auslöser 10 Stoßströme ohne auszulösen durchläßt und daß die Auslösung ohnehin erst zeitverzögert erfolgt, wie es auch bei der eingangs geschilderten bekannten Geräteanordnung der Fall ist.

Bei einem schadhaft gewordenen Überspannungsableiter 2 führt der mehr oder weniger starke Kurzschlußstrom zur Erde dazu, daß sich im Ringkern 9 über längere Zeit ein Magnetfeld aufbaut, das in der Sekundärwirkung eine Spannung induziert, die den Auslöser 10 zum Auslösen bringt. Hierdurch wird das Schaltschloß 11 entklinkt und die Schaltstrecke 12 und im Ausführungsbeispiel auch die Schaltstrecke 13 in der Meldeleitung 14 geöffnet. Die Überspannungsableiter 2 sind dadurch von Erde getrennt, so daß kein weiterer Dauerstrom fließen kann. Eine mit dieser Einrichtung versehene Installationsanlage arbeitet dann wie eine Anlage ohne Überspannungsschutz, jedoch ohne irgendwelche Störungen in der übrigen Anlage. Zur zusätzlichen Sicherung kann einem spannungsabhängigen Widerstandselement in einem Überspannungsableiter auch eine Schmelzsicherung in Reihe geschaltet werden.

Wenn man die Prüfeinrichtung 21 anhand der Prüftaste 25 in Betrieb setzt, wird bei einer intakten Überspannungsschutzeinrichtung bzw. einem Überspannungsschutzgerät 6 über die Leitung 22 vom Außenleiter L1 ein Strom durch den Ringkern 9 hindurch zum Neutralleiter N geführt.

Dieser Strom, der länger als die Verzögerungszeit ansteht, führt über das im Ringkern 9 sich aufbauende Magnetfeld zum Ansprechen des Auslösers 10. Eine Bedienungsperson erkennt dann am Abschalten der Überspannungsschutzeinrichtung, daß die Anlage intakt ist. Nachdem sie wieder eingeschaltet ist, ist die Schutzeinrichtung betriebsbereit.

Liste der Bezugszeichen

1    Verbraucher
2    Überspannungsableiter
3    Fehlerstromschutzschalter
4    Einrichtung zur Sicherung der Überspannungsableiter bei Defekten
5    Weitere, nachgeschaltete, Fehlerstromschutzschalter oder Leitungsschutzschalter
6    Überspannungsschutzgerät
7    Verbindungsleitung
8    Erdungsleitung
9    Ringkern
10   Auslöser
11   Schaltschloß
12   Schaltstrecke
13   Schaltstrecke in einer Meldeleitung 14
14   Meldeleitung
15   Hausanschluß
16   Entladungsstreckeneinrichtung
17   Spannungsabhängiges Widerstandselement
18   Verstärker
19   Versorgungsleitung
20   Versorgungsleitung
21   Prüfeinrichtung
22   Verbindungsleitung
23   Leitungsschutzschalter
24   Begrenzungswiderstand
25   Prüftaste
26   Installationszähler

**Patentansprüche**

1. Elektrische Installationsanlage zur Speisung von Verbrauchern (1), insbesondere mit elektronischen Bauteilen, aus einem Netz, die gegebenenfalls durch Fehlerstromschutzschalter (3) geschützt sind und die durch Überspannungsableiter (2) zu Erdpotential in einem Nebenzweig hinsichtlich der Verbraucher (1) gegen Überspannung gesichert sind, wobei die Überspannungsableiter (2) selbst durch eine Einrichtung gesichert sind, und die Überspannungsableiter (2) einer Gruppe, für die Außenleiter (L1, L2, L3) und den zugeordneten Neutralleiter (N), erdseitig elektrisch verbunden sind und durch eine Erdungsleitung (8) mit Erde in Verbindung stehen, dadurch gekennzeichnet, daß die Erdungsleitung (8) durch einen Ringkern (9) aus magnetisch leitendem Material hindurchgeführt ist, daß eine Sekundärwicklung des Ringkerns mit einem Auslöser (10) verbunden ist, der mit einem Schaltschloß (11) in Eingriffverbindung steht, das zumindest mit einer Schaltstrecke (12) im Erdungsleiter (9) in Eingriffverbindung steht, gegebenenfalls auch mit einer Schaltstrecke (13) in einer Meldeleitung (14), wobei der Ringkern (9) aus einem solchen Material ausgebildet ist, daß er in Verbindung mit dem Auslöser (10) Stoßströme ohne auszulösen durchläßt, und daß die Auslösung zeitverzögert erfolgt.

2. Installationsanlage nach Anspruch 1, dadurch gekennzeichnet, daß die Überspannungsableiter (2) im wesentlichen aus spannungsabhängigen Widerstandselementen bestehen.

3. Installationsanlage nach Anspruch 1, dadurch gekennzeichnet, daß die Überspannungsableiter (2) im wesentlichen aus einer Entladungsstreckeneinrichtung (16) bestehen.

4. Installationsanlage nach Anspruch 3, dadurch gekennzeichnet, daß der Entladungsstreckeneinrichtung (16) ein spannungsabhängiges Widerstandselement (17) in Reihe geschaltet ist.

5. Installationsanlage nach Anspruch 2, dadurch gekennzeichnet, daß dem spannungsabhängigen Widerstandselement eine Schmelzsicherung in Reihe geschaltet ist.

6. Installationsanlage nach Anspruch 3, dadurch gekennzeichnet, daß der Entladungsstreckeneinrichtung (16) ein spannungsabhängiges Widerstandselement (17) parallelgeschaltet ist.

7. Installationsanlage nach einem der Ansprüche 1 bis 6, dadurch gekennzeichnet, daß zwischen Sekundärwindung und Auslöser ein Verstärker (18) eingeschaltet ist, dessen Verbindungsleitungen (19, 20) zwischen einem Außenleiter (L1) und dem Neutralleiter (N) netzseitig vor den zugeordneten Überspannungsableitern (2) angeschlossen sind.

## Claims

1. Electrical installation system for supplying consumers (1), in particular with electronic components, from a network, which, if the case arises, are protected by earth-leakage circuit breakers (3) and which are protected against overvoltage by surge arresters (2) to earth potential in a secondary branch in respect of the consumers (1), wherein the surge arresters (2) are themselves protected by an arrangement and the surge arresters (2) of one group are connected electrically on the earth side for the outer conductors (L1, L2, L3) and the neutral conductors (N), associated therewith, and are connected to earth by an earth conductor (8), characterised in that the earth conductor (8) is led through an annular core (9) of magnetically conductive material, in that a secondary winding of the annular core is connected to a release (10), which is actively connected to a breaker mechanism (11), which is actively connected at least to a breaker gap (12) in the earth conductor (8), possibly also to a breaker gap (13) in an indicator circuit (14) wherein the annular core (9) is constructed or such a material that, in connection with the release (10) it allows impulse currents through without release and in that the release occurs with time-delay.

2. Installation system according to claim 1, characterised in that the surge arresters (2) consist substantially of voltage-dependent resistor elements.

3. Installation system according to claim 1, characterised in that the surge arresters (2) consist substantially of a discharge path arrangement (16).

4. Installation system according to claim 3, characterised in that a voltage-dependent resistor element (17) is connected in series to the discharge path arrangement (16).

5. Installation system according to claim 2, characterised in that a fusible cutout is connected in series to the voltage-dependent resistor element.

6. Installation system according to claim 3, characterised in that a voltage-dependent resistor element (17) is connected in parallel to the discharge path arrangement (16).

7. Installation system according to one of claims 1 to 6, characterised in that an amplifier (18) is connected between the secondary winding and release, the connecting lines (19, 20) of which are attached between an outer conductor (L1) and the neutral conductor (N) on the side of the network before the surge arresters (2) associated therewith.

## Revendications

1. Installation électrique servant à alimenter, à partir d'un réseau, des appareils d'utilisation (1), qui comportent notamment des composants électroniques, sont éventuellement protégés par des disjoncteurs à courant de défaut (3) et sont protégés vis-à-vis d'une surtension par l'intermédiaire de dispositifs (2) dérivant les surtensions en direction du potentiel de terre dans une branche de dérivation par rapport aux appareils d'utilisation (1), et dans laquelle les dispositifs (2) de dérivation des surtensions eux-mêmes sont protégés par un dispositif (4), et les dispositifs (2) de dérivation des surtensions d'un groupe, pour les conducteurs extérieurs (L1, L2, L3) et le conducteur neutre associé (N), sont reliés électriquement, côté terre, et sont reliés à la terre par l'intermédiaire d'un conducteur (8) de mise à la terre, caractérisée par le fait que le conducteur (8) de mise à la terre traverse un noyau toroïdal (9) réalisé en un matériau à conduction magnétique, qu'un enroulement secondaire du noyau toroïdal est relié à un déclencheur (10) qui est en prise avec un verrou de maintien (11) relié au moins à une voie de coupure (12) présente dans le conducteur (8) de mise à la terre et éventuellement également à une voie de coupure (13) présente dans une ligne de signalisation (14), le noyau toroïdal (9) étant réalisé en un matériau tel qu'en liaison avec le déclencheur (10), il transmet des impulsions de courant sans se déclencher et que le déclenchement s'effectue avec un retard.

2. Installation suivant la revendication 1, caractérisée par le fait que les dispositifs (2) de dérivation des surtensions sont constitués essentiellement par des éléments résistifs qui sont fonction de la tension.

3. Installation suivant la revendication 1, caractérisée par le fait que les dispositifs (2) de dérivation des surtensions sont constitués essentiellement par un dispositif (16) constituant une voie de décharge.

4. Installation suivant la revendication 3, caractérisée par le fait qu'un élément résistif (17), qui est fonction de la tension, est branché en série avec le dispositif (16) constituant une voie de décharge.

5. Installation suivant la revendication 2, caractérisée par le fait qu'un fusible est monté en série avec l'élément résistif qui est fonction de la tension.

6. Installation suivant la revendication 3, caractérisée par le fait qu'un élément résistif (17), qui est fonction de la tension, est monté en parallèle avec le dispositif (16) constituant une voie de décharge.

7. Installation suivant l'une des revendications 1 à 6, caractérisée par le fait qu'entre l'enroulement secondaire et le déclencheur est monté un amplificateur (18), dont les conducteurs de raccordement (19, 20), qui s'étendent entre un conducteur extérieur (L1) et le conducteur neutre (N), sont raccordés, côté réseau, en amont des dispositifs associés (2) de dérivation des surtensions.

FIG 1

L1   L2   L3   N

FIG 2

L1; L2; L3; N

FIG 3

## FIG 4

## FIG 5

## FIG 6